(19) Europäisches Patentamt

European Patent Office

Office européen des brevets

(11) **EP 0 896 711 B1**

(12) **FASCICULE DE BREVET EUROPEEN**

(45) Date de publication et mention
de la délivrance du brevet:
**19.07.2000 Bulletin 2000/29**

(21) Numéro de dépôt: **97921895.5**

(22) Date de dépôt: **25.04.1997**

(51) Int Cl.⁷: **G10L 17/00**

(86) Numéro de dépôt international:
**PCT/FR97/00753**

(87) Numéro de publication internationale:
**WO 97/42625 (13.11.1997 Gazette 1997/49)**

(54) **PROCEDE DE RECONNAISSANCE VOCALE D'UN LOCUTEUR METTANT EN OEUVRE UN MODELE PREDICTIF, NOTAMMENT POUR DES APPLICATIONS DE CONTROLE D'ACCES**

SPRECHERERKENNUNGSVERFAHREN UNTER ANWENDUNG EINES PRÄDIKTIVEN MODELS, INSBESONDERE ZUR ZUGANGSKONTROLLE GEEIGNET

METHOD FOR THE VOICE RECOGNITION OF A SPEAKER USING A PREDICTIVE MODEL, PARTICULARLY FOR ACCESS CONTROL APPLICATIONS

(84) Etats contractants désignés:
**DE ES GB IT SE**

(30) Priorité: **03.05.1996 FR 9605566**

(43) Date de publication de la demande:
**17.02.1999 Bulletin 1999/07**

(73) Titulaire: **UNIVERSITE PIERRE ET MARIE CURIE
75005 Paris (FR)**

(72) Inventeurs:
- **MONTACIE, Claude
  F-75009 Paris (FR)**
- **CARATY, Marie-José
  F-94140 Alfortville (FR)**
- **LE FLOCH, Jean-Luc
  F-95150 Taverny (FR)**

(74) Mandataire: **Keib, Gérard
NOVAMARK TECHNOLOGIES
Anciennement Brevets Rodhain & Porte
122, Rue Edouard Vaillant
92593 Levallois Perret Cedex (FR)**

(56) Documents cités:
**US-A- 4 956 865          US-A- 5 054 084
US-A- 5 097 509**

- **EUROPEAN CONFERENCE ON SPEECH
  COMMUNICATION AND TECHNOLOGY
  (EUROSPEECH), vol. 1, 21 Septembre 1993,
  pages 161-164, XP000576662 MONTACIE C ET
  AL: "DISCRIMINANT AR-VECTOR MODELS FOR
  FREE-TEXT SPEAKER VERIFICATION" cité
  dans la demande**

EP 0 896 711 B1

## Description

L'invention concerne un procédé de reconnaissance vocale d'un locuteur mettant en oeuvre un modèle prédictif.

Elle concerne plus particulièrement un procédé de reconnaissance vocale d'un locuteur mettant en oeuvre un modèle prédictif du type autorégressif vectoriel.

Le procédé s'applique aussi bien à l'identification d'un locuteur ou à la détection des changements de locuteurs.

Elle trouve application dans de nombreux domaines et plus particulièrement dans le contrôle d'accès. Le contrôle d'accès s'effectue par la vérification d'une ou plusieurs élocutions d'un locuteur.

Elle trouve notamment application, bien que de façon non exclusive, dans les deux domaines suivants : autorisation d'accès faisant appel à une serrure vocale et autorisation d'accès à des informations confidentielles : validation de transactions et/ou opérations financières, accès sécurisé à des services d'information distants, etc.

Les procédés de l'art connu comportent habituellement un mode d'apprentissage et un mode de vérification. Ils comprennent en tout ou partie les phases et étapes suivantes : étapes de déclaration d'identité et de demande de services (phase 1), étapes d'autorisation d'apprentissage d'une ou plusieurs élocutions pour un locuteur (phase 2), étapes d'autorisation de vérification d'une ou plusieurs élocutions pour un locuteur (phase 3), étapes d'extraction de caractéristiques statistiques d'une ou plusieurs élocutions (phase 4), étapes de calcul de modèle prédictif à partir de caractéristiques statistiques d'une ou plusieurs élocutions (phase 5), étapes de vérification de l'identité par l'élocution (phase 6), phases d'identification du locuteur par l'élocution (phase 7), étapes d'autorisation d'accès à tout ou partie des ressources demandées en première phase (phase 8) et étapes de mise à jour du dictionnaire des caractéristiques statistiques et du modèle prédictif correspondant à tout ou partie des élocutions d'un locuteur (phase 9).

La première phase permet au locuteur de déclarer une identité et de requérir un mode de fonctionnement (apprentissage ou vérification) dans le but d'accéder à une ou plusieurs ressources.

La deuxième phase permet à un locuteur d'utiliser le mode d'apprentissage du dispositif d'accès.

La troisième phase permet à un locuteur d'utiliser le mode de vérification du dispositif d'accès.

La quatrième phase comporte une étape d'acquisition numérique et de filtrage d'une ou plusieurs élocutions, une étape d'extraction de vecteurs de dimension p, une étape de calcul de q+1 matrices de corrélation de taille p x p de tout ou partie des vecteurs calculés. Ces q+1 matrices constituent les caractéristiques statistiques de l'élocution du locuteur.

La cinquième phase comporte une étape de calcul de q matrices de prédiction de taille p x p à partir des matrices de corrélation, une étape de calcul de l'inverse de la matrice d'erreur associée. Ces q+1 matrices constituent le modèle prédictif de l'élocution du locuteur. Les références de l'élocution d'un locuteur sont constituées des caractéristiques statistiques et du modèle prédictif associé.

La sixième phase comporte une étape de calcul des mesures de ressemblance entre les caractéristiques statistiques d'une ou plusieurs élocutions et tout ou partie des références des élocutions du dictionnaire, et une étape de calcul de la vraisemblance de la vérification d'identité.

La septième phase comporte une étape de calcul des mesures de ressemblance entre les caractéristiques statistiques d'une ou plusieurs élocutions et tout ou partie des références du dictionnaire, une étape de recherche des références les plus proches de l'élocution, et une étape de calcul de la vraisemblance de l'identification du locuteur.

La huitième phase autorise l'accès à tout ou partie des ressources demandées en première phase.

La neuvième phase permet la mise à jour des références de l'élocution d'un locuteur du dictionnaire ou l'ajout dans le dictionnaire des références d'un nouveau locuteur.

La vérification automatique du locuteur consiste à vérifier l'identité d'une personne en fonction d'un échantillon sonore de sa voix. Deux décisions sont possibles, selon un schéma binaire : "authentification" ou "non-authentification de l'identité".

Parmi le grand nombre de documents de l'état de l'art relatifs à des procédés de vérification du locuteur, on peut citer, à titre d'exemple non exhaustif, l'article de de Claude Montacié et Jean-Luc Le Floch : "Discriminant AR-Vector Models for Free-Text Speaker Verification" paru dans "Congrès EuroSpeech 1993", pages 161-164. Cet article divulgue un procédé de vérification automatique du locuteur, mais n'enseigne pas les conditions d'extraction des paramètres permettant d'obtenir un système de vérification automatique du locuteur performant, rapide et fonctionnant dans des environnements bruités.

Les procédés précités s'appliquant, comme il a été indiqué, aussi bien à l'identification d'un locuteur ou à la détection des changements de locuteurs, il y lieu de tenir compte, entre autres, des caratéristiques physiologiques de la voix humaine. Notamment les périodes fondamentales des signaux vocaux complexes, selon qu'il s'agit d'un homme ou d'une femme, correspondent respectivement à des des fréquences d'environ 100 Hz et 200 Hz. Lors de la phase quatre précitée, on utilise des fenêtre de temps qui seront définies ci-après. Dans l'art connu du traitement de la parole, il est admis que ces fenêtres de temps doivent être plus importantes que les périodes fondamentales précitées. En d'autres termes, l'analyse s'effectue sur une période plus importante que la période fondamentale. Il s'ensuit que les fenêtres habituellement utilisées sont comprises typiquement dans la gamme suivante : 15 à 40 ms. Des essais montrent d'ailleurs que lorsque l'on diminue cet intervalle de temps, les performances commencent à baisser.

D'autre part, on utilise habituellement plusieurs fenêtres qui se recouvrent. Il est également admis que l'espacement entre deux fenêtres consécutives, cet espacement étant défini comme la distance temporelle entre les centres des fenêtres, doit être de l'ordre de 10 ms environ, voire plus.

Or, de façon surprenante, il a été déterminé que lorsque l'on descendait à des valeurs bien inférieures aux valeurs précitées, les performances augmentaient, les résultats obtenus étaient meilleurs.

De façon plus précise, selon l'invention la durée de la fenêtre doit être inférieure à 10 ms.

De façon préférentielle, la période fondamentale étant, environ, de 5 ms pour les femmes et de 10 ms pour les hommes, on choisit une valeur de fenêtre égale à la période moyenne fondamentale, soit 7,5 ms.

De même, la distance temporelle entre fenêtre est choisie inférieure à 4,5 ms.

On choisit préférentiellement des valeurs bien inférieures à cette valeur, par exemple 2 ms.

La présente invention concerne donc un procédé de reconnaissance vocale d'un locuteur mettant en oeuvre un modèle prédictif qui tout en conservant les caractéristiques techniques et les avantages des procédés de l'art connu, présente cependant de meilleures performances.

Le procédé selon l'invention s'adapte tout particulièrement aux modèles prédictif du type autorégressif vectoriel.

L'invention a donc pour objet un procédé de reconnaissance vocale d'un locuteur mettant en oeuvre un modèle prédictif d'ordre q, comprenant au moins une phase d'extraction de caractéristiques statistiques comportant au moins une étape d'acquisition numérique d'un échantillon sonore d'une durée déterminée D du locuteur, correspondant à au moins une élocution du locuteur, une étape de transformation de cet échantillon sonore en une suite de vecteurs de dimension déterminée p, obtenus à partir d'une suite de fenêtres d'analyse de durée moyenne T et d'intervalle moyen I, et une étape de détermination de q+1 matrices de corrélation d'ordre p x p à partir de cette suite de vecteurs, avec p et q nombres entiers différents de zéro, caractérisé en ce que ladite durée moyenne T a une durée inférieure à 10 ms.

Elle a encore pour objet l'application d'un tel procédé à l'identification d'un locuteur ou à la détection des changements de locuteurs.

Elle a encore pour objet l'application d'un tel procédé au contrôle d'accès à l'aide d'une serrure vocale.

Elle a enfin pour objet l'application d'un tel procédé au contrôle d'accès à des informations confidentielles, notamment à la validation de transactions et/ou opérations financières, accès sécurisé à des services d'information distants.

L'invention sera mieux comprise et d'autres caractéristiques et avantages apparaîtront à la lecture de la description qui suit en référence aux figures annexées, et parmi lesquelles :

- La figure 1 illustre un exemple de signal de fenêtre ;
- La figure 2 est un organigramme permettant la description détaillée du procédé selon l'invention ;
- La figure 3 illustre l'application du procédé selon l'invention à un contrôle d'accès mettant en oeuvre une serrure vocale ;
- La figure 4 illustre l'application du procédé selon l'invention au contrôle d'accès à distance à des informations confidentielles.

Comme il a été indiqué précédemment, le procédé selon l'invention conserve les caractéristiques générales des procédés de l'art connu. Pour fixer les idées, sans que cela soit limitatif en quoique ce soit de la portée de l'invention, on se placera dans ce qui suit dans le cadre particulier d'un modèle prédictif du type autorégressif vectoriel.

Le procédé selon l'invention concerne plus particulièrement trois grandes familles d'opérations : l'extraction de caractéristiques statistiques d'un échantillon sonore spécialement adapté aux modèles prédictifs autorégressifs vectoriels, le calcul de mesures de ressemblance entre échantillons sonores et la mise à jour du dictionnaire des références des locuteurs. Ces grandes familles d'opérations vont maintenant être décrites.

Cette partie du procédé caractérise un échantillon sonore par q+1 matrices de corrélation d'ordre p x p, calculées à partir d'un ensemble de vecteurs de dimension p. La méthode d'obtention des vecteurs est liée à la phase 4 précitée et comporte des spécificités propres à l'invention.

Avant de détailler les opérations liées à l'extraction de caractéristiques statistiques d'un échantillon sonore, il convient de définir les termes utilisés.

Un échantillon sonore est une représentation quelconque d'un signal acoustique (par exemple : acoustique, électrique, physique, magnétique, optique, etc.). Toute sous-partie d'un échantillon sonore est un échantillon sonore. Toute concaténation d'échantillons sonores est un échantillon sonore.

L'acquisition numérique de l'échantillon sonore est la transformation du signal analogique représentant l'échantillon sonore de durée D en une suite de N valeurs numériques $\{x_i\}$ (i=1,..,N) à des instants d'échantillonnage

$\{t_i\}$ (i=1,..,N) croissants.

Le filtrage numérique est la transformation d'une suite de N valeurs numériques $\{x_i\}$ (i=1,..,N), aux instants d'échantillonnage $\{t_i\}$ (i=1,..,N), en une suite de N' valeurs numériques $\{x'_i\}$ (i=1,..,N') aux instants d'échantillonnage $\{t'_i\}$ (i=1,..,N') croissants. Les suites de valeurs numériques $\{x_i\}$ (i=1,..,N) peuvent subir, le cas échéant, de nombreux types de filtrages. Dans ce cas, on utilise les nouvelles suites numériques.

La fenêtre d'analyse F est une fonction discrète f de valeur $\{f_i\}$ (i=1,..,N) aux instants $\{t_i\}$ (i=1,..,N). Cette fenêtre d'analyse F est associée à l'acquisition numérique (et au filtrage éventuel) de l'échantillon sonore. On peut par exemple citer les fenêtres d'analyse rectangulaires, les fenêtres de Hamming, etc.

Le maximum M d'une fenêtre d'analyse F est défini par la relation :

$$M = \max_{i=1,..,N} |f_i|$$

La zone Z d'une fenêtre d'analyse F est la fonction discrète $f_Z$ de valeurs $\{f_{Z_i}\}$ (i=1,..,$N_Z$) avec $f_{Z_i} = f_{Z(i)}$ et $N_Z \leq N$, Z(i) étant une fonction discrète de la forme $Z(i) = i + D_Z$, $D_Z$ étant une valeur entière comprise entre 0 et $N - N_Z$.

La zone Z de type A d'une fenêtre d'analyse F est la zone Z pour laquelle la relation suivante est satisfaite :

$$\forall i \in \{1,..,N_Z\} \; |f_{Z_i}| > M/5$$

La zone Z de type B d'une fenêtre d'analyse F est la zone Z pour laquelle la relation suivante est satisfaite :

$$\forall i \in \{1,..,N_Z\} \; |f_{Z_i}| \leq M/5$$

Une fenêtre d'analyse F peut être décomposée en zones de types A ou B.

La durée d'une zone Z est égale à $t_{Z(N_Z)} - t_{Z(1)}$.

Une zone $Z_F$ est une zone de type A de plus grande durée sur toutes les décompositions de F.

La durée de la fenêtre d'analyse F est la durée de $Z_F$.

Le centre de la fenêtre d'analyse F est défini par la relation :

$$C_F = \sum_{t_i \in Z_F} t_i \times f_i \Big/ \sum_{t_i \in Z_F} f_i$$

Un échantillon sonore $\{x_i\}$ (i=1,..,N), fenêtré par la fenêtre d'analyse F, est un ensemble de N valeurs numériques $\{x_{f_i}\}$ (i=1,..,N), tel que $x_{f_i} = x_i \times f_i$.

Un intervalle entre deux fenêtres d'analyse $F_1$ et $F_2$ est défini par la relation :

$$I_{F_1 F_2} = C_{F_2} - C_{F_1}$$

L'ensemble de fenêtres (T, I, N, D) est la suite de $N_F$ fenêtres d'analyse successives $\{F_j\}$ (j=1,..,$N_F$) de longueur N, avec $N_F \leq (D - T) / I$ où T est la durée moyenne de la fenêtre d'analyse et I l'intervalle moyen entre deux fenêtres d'analyse. Cet ensemble de fenêtres (T, I, N, D) est associé à l'acquisition numérique (et au filtrage éventuel) de l'échantillon sonore.

L'extraction d'un vecteur de dimension p est la fonction calculant un vecteur $y_F$ de dimension p à partir d'un échantillon sonore $\{x_i\}$ (i=1,..,N) fenêtré par la fenêtre d'analyse F. Tous les $\{x_{f_i}\}$ (i=1,..,N) non nuls doivent être utilisés dans le calcul de cette fonction, c'est-à-dire que la modification sensible d'une des valeurs non nulles de l'ensemble $\{x_{f_i}\}$ (i=1,..,N) doit modifier le résultat de la fonction de manière sensible. Les paramétrisations suivantes peuvent, par exemple, être utilisées : transformée de Fourier, cesptre, prédiction linéaire, etc.

L'ensemble de vecteurs $(\{x_i\}, p, T, I, N, D)$ est une suite de $N_F$ vecteurs $\{y_{F_j}\}$ (j=1,..,$N_F$) calculés à partir d'un ensemble de fenêtres (T, I, N, D).

Les matrices de corrélation d'un échantillon sonore $(\{x_i\}, p, q, T, I, N, D)$ sont un ensemble de q+1 matrices $\{R_m\}$ (m=0,..,q) de taille p x p, tel que la relation suivante soit satisfaite :

$$R_m = \sum_{j=1}^{N_F - m} YF_j \; YF_{j+m}{}^T$$

Elles peuvent subir, le cas échéant, toutes sortes de normalisation.

Le procédé selon l'invention, dans la quatrième phase, consiste en la détermination des paramètres (p, q, T, I) permettant d'obtenir les meilleures caractéristiques statistiques, pour le modèle prédictif utilisé, d'un échantillon sonore en terme de vérification du locuteur.

p peut être quelconque, cependant ce paramètre est généralement compris entre 6 et 30.

Selon une caractéristique importante de l'invention, T est choisi inférieur à 10 ms et I inférieur à 4,5 ms.

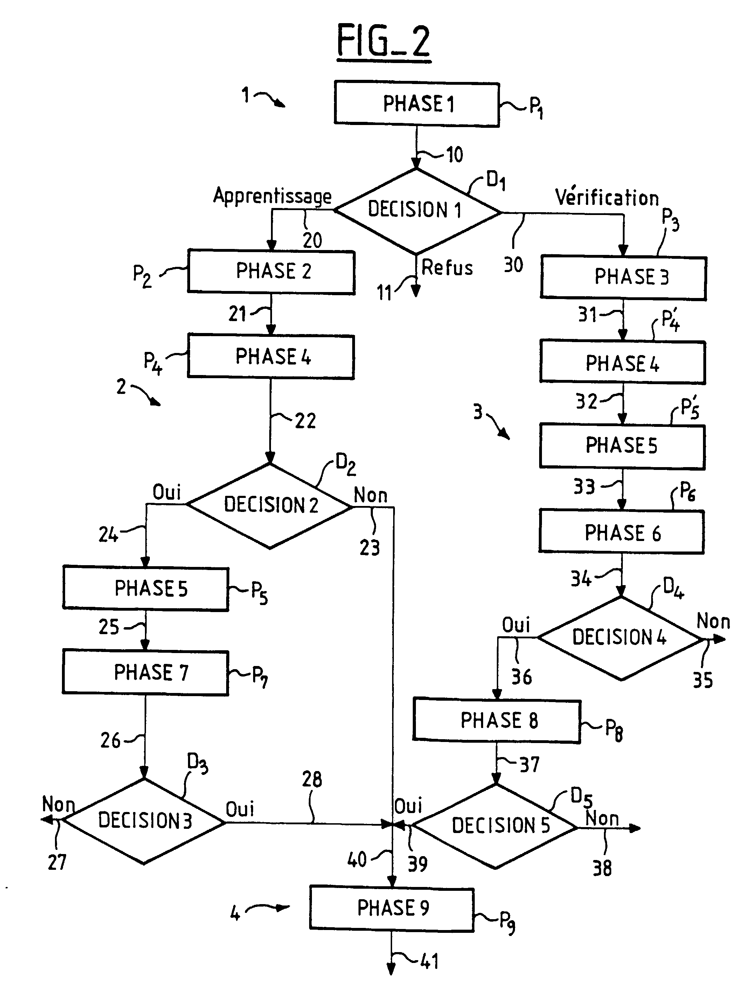

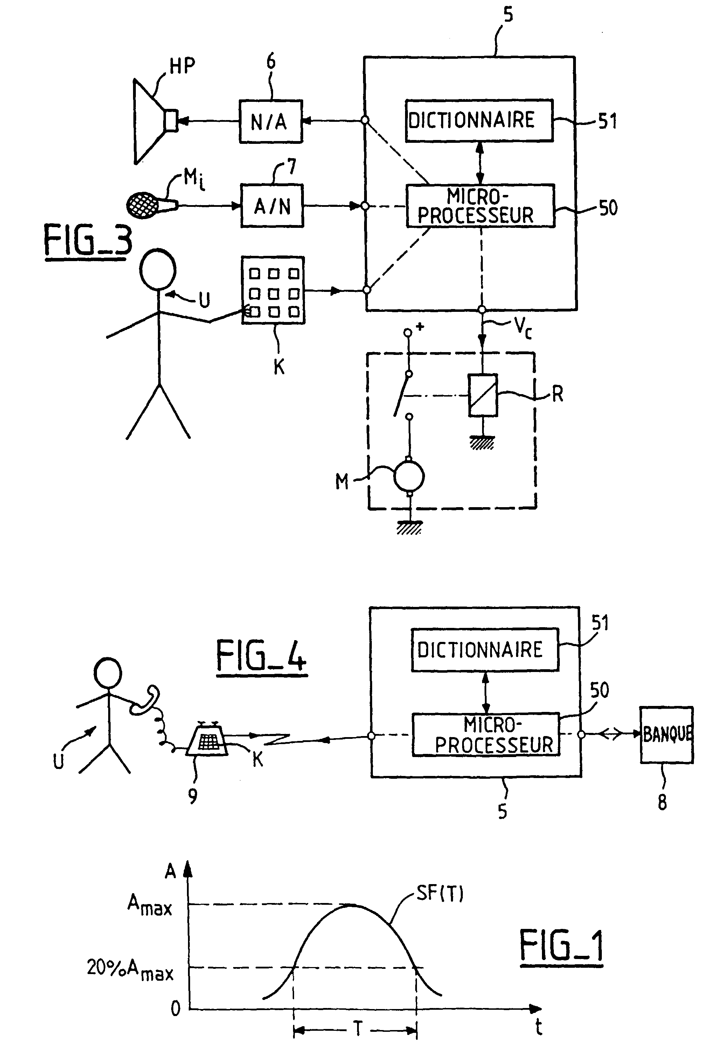

Il est bien connu que de tels signaux ne sont jamais parfaits. La figure 1 illustre schématiquement un signal temporel SF(t) représentant une fenêtre, dans un repère orthonormé "Amplitude A - Temps t". La largeur de la fenêtre peut être définie, par exemple, par l'intervalle de temps T séparant les intersections d'une droite parallèle à l'axe des temps avec la courbe représentant le signal SF(t), à 20% de l'amplitude maximale $A_{max}$.

En outre q, T et I doivent être reliés par l'inéquation suivante :

$$I < T/\max(3, q)$$

A titre d'exemple, si on choisit q = 4 avec T = 8ms, I doit être inférieur à 2 ms.

De façon général, plus le paramètre q est élevé, plus les caractéristiques statistiques obtenues sont meilleures. Cependant, cette amélioration est obtenu au prix d'un coût de calcul plus important. Aussi, de façon pratique, q est généralement choisi dans la gamme 1 à 10, ce qui constitue un bon compromis.

L'invention concerne également des mesures de ressemblance entre échantillons sonores qui sont utilisées dans les phases 6 et 7 précitées. Le calcul du modèle prédictif va être détaillé à partir des caractéristiques statistiques d'une ou plusieurs élocutions du locuteur, ce qui constitue la phase 5.

Les mesures de ressemblance sont basées sur le calcul des modèles prédictifs et des matrices d'erreur associées.

Comme précédemment, il est utile tout d'abord de définir les termes utilisés.

La prédiction directe du vecteur $y_{F_j}$ est égale à $\hat{y}_{F_j}^D$

La prédiction rétrograde du vecteur $y_{F_j}$ est égale à $\hat{y}_{F_j}^R$

Le modèle prédictif vectoriel direct ($\{x_i\}$, p, q, T, I, N, D) d'un ensemble de vecteurs ($\{x_i\}$, p, T, I, N, D) est l'ensemble de q matrices $\{A_m\}$ (m=1,..,q) de taille p x p calculées à partir des matrices de corrélation $\{R_m\}$ (m=0,..,q). Le but est de prédire au mieux un vecteur $y_{F_j}$ à partir des q vecteurs précédents.

$$\hat{y}_{F_j}^D = \sum_{m=1}^{q} A_m \; y_{F_{j-m}}$$

Le modèle prédictif vectoriel rétrograde ($\{x_i\}$, p, q, T, I, N, D) d'un ensemble de vecteurs ($\{x_i\}$, p, T, I, N, D) est l'ensemble de q matrices $\{B_m\}$ (m=1,..,q) de taille p x p calculées à partir des matrices de corrélation $\{R_m\}$ (m=0,..,q). Le but est de prédire au mieux un vecteur $y_{F_j}$ à partir des q vecteurs suivants :

$$\hat{y}_{F_j}^R = \sum_{m=1}^{q} B_m \; y_{F_{j+m}}$$

L'erreur directe $\varepsilon_j$ ($\{x_i\}$, p, q, T, I, N, D, $\{A_m\}$) sur un ensemble de vecteurs ($\{x_i\}$, p, T, I, N, D) par un modèle prédictif direct ($\{x_i\}$, p, q, T, I, N, D) est égale au filtrage inverse d'un ensemble de vecteurs ($\{x_i\}$, p, T, I, N, D) par un modèle prédictif direct $\{A_m\}$ (m=1,..,q), tel que la relation suivante soit vérifiée :

$$\varepsilon_j = YF_j - \sum_{m=1}^{q} A_m YF_{j-m}$$

L'erreur rétrograde $\xi_j$ ($\{x_i\}$, p, q, T, I, N, D, $\{B_m\}$) sur un ensemble de vecteurs ($\{x_i\}$, p, T, I, N, D) par un modèle

prédictif rétrograde ($\{x_i\}$, p, q, T, I, N, D) est égale au filtrage inverse d'un ensemble de vecteurs ($\{x_i\}$, p, T, I, N, D) par un modèle prédictif rétrograde $\{B_m\}$ (m = 1,..,q) tel que la relation suivante soit vérifiée :

$$\xi_j = y_{F_j} - \sum_{m=1}^{q} B_m \, y_{F_{j+m}}$$

La matrice d'erreur directe $E_A$ ($\{x_i\}$, p, q, T, I, N, D, $\{A_m\}$) de l'erreur directe ($\{x_i\}$, p, q, T, I, N, D, $\{A_m\}$) est égale à la matrice de covariance, de taille p x p, de l'erreur directe ($\{x_i\}$, p, q, T, I, N, D, $\{A_m\}$) tel que la relation suivante soit vérifiée :

$$E_A = \sum_{j=1}^{N_f} \varepsilon_j \, \varepsilon_j^T$$

La matrice d'erreur rétrograde $E_B$ ($\{x_i\}$, p, q, T, I, N, $\{B_m\}$) de l'erreur rétrograde ($\{x_i\}$, p, q, T, I, N, D, $\{B_m\}$) est égale à la matrice de covariance, de taille p x p, de l'erreur rétrograde ($\{x_i\}$, p, q, T, I, N, D, $\{B_m\}$) tel que la relation suivante soit vérifiée :

$$E_B = \sum_{j=1}^{N_f} \xi_j \, \xi_j^T$$

Pour calculer les modèles prédictifs directs $\{A_m\}$ (m=1,..,q) ou rétrogrades $\{B_m\}$ (m=1,..,q), on peut citer, à titre d'exemple non limitatif, l'algorithme de Levinson-Whittle-Robinson qui minimise la trace de $E_A$ et $E_B$ et qui s'énonce comme suit :

$$A_0^0 = I_d; \; B_0^0 = I_d; \; E_{A0} = R_0; \; E_{B0} = R_0;$$

for i = 0 to q-1 d$_o$

$$F_i = \sum_{m=0}^{i} A_m^i \, R_{i+1-m}$$

$$K_{Ai} = -F_i \, E_{Bi}^{-1}; \; K_{Bi} = -F_i^T \, E_{Ai}^{-1};$$

$$E_{Ai+1} = (I_d - K_{Ai} \, K_{Bi}) E_{Ai};$$

$$E_{Bi+1} = (I_d - K_{Bi} \, K_{Ai}) E_{Bi};$$

$$A_0^{i+1} = A_0^i; \; B_0^{i+1} = K_{Bi} \, A_0^i;$$

$$A_{i+1}^{i+1} = K_{Ai} \, B_i^i; \; B_{i+1}^{i+1} = B_i^i;$$

for m = 1 to i do

$$A_m^{i+1} = A_m^i + K_{Ai} \, B_{m-1}^i$$

$$B_m^{i+1} = B_{m-1}^i + K_{Bi} A_m^i$$

```
end for
    end for
    for m = 1 to q do A_m = A_m^q  end for
    for m = 1 to q do B_m = B_m^q  end for
```

Soient les définitions et notations suivantes dans le cas du modèle prédictif direct :

a/ $\{x1_i\}$ (i=1,...,$N_1$) est l'ensemble de $N_1$ valeurs numériques de l'échantillon sonore 1 ;
b/ $\{R1_m\}$ (m=0,..,q) représente q+1 matrices de corrélation pour ($\{x1_i\}$, p, q, T, I, D) ;
c/ $\{A1_m\}$ (m=1,..,q) est le modèle prédictif direct d'ordre q pour ($\{x1_i\}$, p, q, T, I, D) ;
d/ $\{x2_i\}$ (i=1,..$N_2$) est l'ensemble de $N_2$ valeurs numériques de l'échantillon sonore 2 ;
e/ $\{R2_m\}$ (m=0,..,q) représente q+1 matrices de corrélation pour ($\{x2_i\}$, p, q, T, I, D) ;
f/ $\{A2_m\}$ (m=1,..,q) est le modèle prédictif direct d'ordre q pour ($\{x2_i\}$, p, q, T, I, D) ;
g/ $E_{A11}$ est la matrice d'erreur directe (($x1_i$), p, q, T, I, D, $\{A1_m\}$) ;
h/ $E_{A21}$ est la matrice d'erreur directe ($\{x1_i\}$, p, q, T, I, D, $\{A2_m\}$) ;
i/ $E_{A12}$ est la matrice d'erreur directe ($\{x2_i\}$, p, q, T, I, D, $\{A1_m\}$) ;
j/ $E_{A22}$ : matrice d'erreur directe ($\{x2_i\}$, p, q, T, I, D, $\{A2_m\}$).

Ces matrices peuvent être calculées directement par l'algorithme suivant :

$$X_{A12} = \sum_{m=1}^{q} \left( \left( \left( R2_m + \sum_{i=0}^{m-1} A1_{m-i} R2_m \right) + R2_m \right) A1_m^T \right)$$

$$Y_{A12} = R2_0 + \sum_{m=1}^{q} A1_{m-i} R2_0 A1_m^T$$

$$E_{A12} = X_{A12} + X_{A12}^T + Y_{A12}$$

$$X_{A21} = \sum_{m=1}^{q} \left( \left( \left( R1_m + \sum_{i=0}^{m-1} A2_m R1_{m-i} \right) + R1_m \right) A2_m^T \right)$$

$$Y_{A21} = R1_0 + \sum_{m=1}^{q} A2_{m-i} R1_0 A2_m^T$$

$$E_{A11} = R1_0 + \sum_{m=i}^{q} A1_m R1_m^T$$

$$E_{A22} = R2_0 + \sum_{m=1}^{q} A2_m R2_m^T$$

Soit G(E) une fonction des valeurs propres d'une matrice E de taille p x p. Par exemple, G(E) peut être égale à la somme des valeurs propres (Trace(E)) ou au produit des valeurs propres (Déterminant(E)).

La mesure de ressemblance entre deux échantillons sonores est une fonction de $G(E_{A11}E_{A12}^{-1})$, $G(E_{A12}^{-1}E_{A11})$, $G(E_{A22}E_{A21}^{-1})$ et $G(E_{A21}^{-1}E_{A22})$. A titre d'exemple, on peut choisir une somme pondérée.

La mesure de ressemblance peut également être définie à partir des modèles rétrogrades, ou en mélangeant ces deux modélisations.

Le procédé selon l'invention concerne également la mise à jour du dictionnaire des références, c'est-à-dire des caractéristiques statistiques (matrices de corrélation) et des modèles prédictifs. La mise à jour des caractéristiques statistiques est réalisée par toute fonction possible permettant d'obtenir un nouvel ensemble de matrices de corrélation $\{R_m\}$ à partir de deux ensembles de matrices de corrélation. Les deux jeux de matrices de corrélation sont celui du dictionnaire $\{R1_m\}$ et celui provenant d'une ou plusieurs nouvelles élocutions $\{R2_m\}$.

A titre d'exemple non limitatif, le nouvel ensemble de matrices de corrélation $\{R_m\}$ peut être obtenu par la relation suivante :

$$R_m = \alpha\, R1_m + \beta R2_m + \gamma \sqrt{R1_m\, R2_m}$$

(m=0,...,q)

Le procédé selon l'invention va maintenant être décrit de façon détaillée en regard de l'organigramme de la figure 2. Celui-ci comprend deux branches principales, à partir d'un tronc de départ commun 1 : la branche de gauche concerne l'apprentissage (branche 2), alors que la branche de droite concerne la vérification (branche 3). Les phases 1 à 9, référencées $P_1$ à $P_9$ sont relatives aux phases 1 à 9 précédemment rappelées. Un certain nombre de décisions intermédiaires sont prises lors du déroulement des phases du procédé et ont été référencées $D_1$ à $D_5$.

Pendant la phase 1 ou $P_1$, le locuteur déclare une identité par les moyens mis à sa disposition. Il peut avoir recours à la frappe d'un code connu de lui seul, utiliser une carte magnétique ou un moyen similaire. Il demande alors un des deux modes de fonctionnement : apprentissage ou vérification, ce dans le but d'accéder à une ou plusieurs ressources.

En fin de phase $P_1$ (sortie 10) une première décision est prise ou décision $D_1$. Cette décision $D_1$ porte sur l'acceptation de réaliser un apprentissage (branche 20) ou une vérification (branche 30), pour accéder aux ressources demandées dans la phase $P_1$. Par exemple un apprentissage peut être substitué à une vérification si l'apprentissage est jugé insuffisant, ou un refus peut être signifié (branche 11), si le mode de fonctionnement ou les ressources demandées sont indisponibles.

Les ressources précitées dépendent naturellement de l'application précise envisagée. Des exemples seront décrits ci-après.

Si on considère que la décision $D_1$ a aiguillé le processus vers la branche "Apprentissage" 2 (branche 20 de $D_1$), la phase 2 ou $P_2$ est initiée.

Cette phase $P_2$ déclenche toutes les actions permettant l'apprentissage d'une référence d'une ou plusieurs élocutions du locuteur dont l'identité est déclarée. Selon les applications précises, il va s'agir de l'activation d'entrée sonore, de la recherche de dictionnaires, etc.

En fin de phase $P_2$ (sortie 21), le procédé, dans cette branche "Apprentissage" 2 passe directement à la phase 4 ou $P_4$.

Pendant cette phase $P_4$, l'extraction des caractéristiques statistiques se décompose en trois étapes comme il a été précédemment décrit. La première étape consiste en l'acquisition numérique et le filtrage éventuel de l'échantillon sonore correspondant à une ou plusieurs élocutions. La deuxième étape est sa transformation en une suite de vecteurs obtenus à partir d'une suite de fenêtres d'analyse de taille moyenne T et d'intervalle moyen I, conformément à l'une des caractéristiques principales de l'invention. La troisième étape est le calcul de q+1 matrices de corrélation à partir de cette suite de vecteurs.

En fin de phase $P_4$ (sortie 22), une deuxième décision $D_2$ est prise. En effet, lors de l'apprentissage, une identification de l'identité du locuteur peut être décidée pour s'assurer de son identité avant une mise à jour de ses références d'élocution. Si la décision est "non" (branche 23), la phase 9 ou $P_9$ est directement initiée. Cette phase $P_9$ sera décrite ci-après. Dans le cas contraire : décision "oui" (branche 24), la phase 5 ou $P_5$ est initiée.

La phase $P_5$ est réalisée en deux étapes. La première étape consiste à calculer, à partir des caractéristiques statistiques (matrices de corrélation) d'une ou plusieurs élocutions, q matrices de prédiction. Plusieurs choix sont possibles pour le calcul d'un modèle prédictif : un modèle prédictif direct, un modèle prédictif rétrograde ou une combinaison des deux modèles. La deuxième étape réalise le calcul de l'inverse de la matrice d'erreur entre la suite des vecteurs calculés à partir de l'échantillon sonore d'une ou plusieurs élocutions et le modèle prédictif calculé sur ces mêmes vecteurs. L'ensemble de ces q+1 matrices définit le modèle prédictif de l'élocution du locuteur. Les références de l'élocution d'un locuteur sont constituées des caractéristiques statistiques et du modèle prédictif associé.

Dans cette branche "d'Apprentissage" 2, à la sortie 25 de la phase $P_5$, la phase 7 ou $P_7$ est directement initiée, sans passer par la phase 6 ou $P_6$.

La phase $P_7$ comporte quatre étapes. La première étape consiste en l'extraction d'un dictionnaire contenant les références de tous les locuteurs possibles. La deuxième étape consiste dans le calcul des matrices d'erreur entre les références précédemment sélectionnées et les références (ou seulement les caractéristiques statistiques) de l'échantillon sonore à identifier. La troisième étape consiste en un calcul des mesures de ressemblance à partir des matrices d'erreur calculées à l'étape précédente. La quatrième étape calcule la vraisemblance de l'identification du locuteur à partir des mesures de vraisemblance calculées lors de la troisième étape.

En sortie de cette phase $P_7$, une troisième décision $D_3$ est prise. Cette décision $D_3$ porte sur l'adéquation de l'identité résultant de l'identification de la phase $P_7$ et de l'identité déclarée lors de la phase $P_1$, S'il n'y a pas adéquation : branche "non" 27, le processus est arrêté. Selon les applications, une action peut alors être prise à ce niveau.

Dans le cas contraire : branche "oui" 28, le procédé se déroule sur un tronc 40 commun aux branches 23 (décision $D_2$) et 28 (décision $D_3$), ainsi qu'à la branche 39 (décision $D_5$) qui sera explicité ultérieurement. La phase 9 ou $P_9$ est alors initiée.

La phase 9 permet la mise à jour de références de l'élocution d'un locuteur du dictionnaire ou l'ajout dans le dictionnaire de celles d'un nouveau locuteur. La mise à jour des références comporte une étape d'extraction, du dictionnaire, des q+1 matrices de corrélation d'un locuteur, une étape de calcul et de stockage dans le dictionnaire de q+1 nouvelles matrices de corrélation par accumulation des anciennes matrices et celles extraites d'une ou plusieurs élocutions, une étape de calcul et de stockage dans le dictionnaire du modèle prédictif correspondant aux nouvelles matrices de corrélation. L'ajout dans le dictionnaire des références de l'élocution d'un nouveau locuteur consiste en un stockage des q+1 matrices de corrélation du locuteur et du modèle prédictif correspondant.

En sortie 41 de cette phase $P_9$, une action peut être prise, action qui dépend naturellement de l'application envisagée. Dans le cas le plus fréquent, le processus engagé s'arrête, le système étant mis à jour pour le locuteur courant ou prêt à le reconnaître, s'il s'agit d'un nouveau locuteur.

Si maintenant on considère la branche "Vérification" 3 (sortie 30 de la décision $D_1$), le procédé initie directement la phase 3 ou $P_3$.

Cette phase $P_3$ déclenche toutes les actions permettant la vérification du locuteur dont l'identité est déclarée. Comme dans le cas de la phase $P_2$, selon les applications précises, il va s'agir de l'activation d'entrée sonore, de la recherche de dictionnaires, etc.

En sortie 31 de la phase $P_3$, la phase $P'_4$ va être initiée. Cette phase $P'_4$ est strictement identique à la phase $P_4$ de la branche "Apprentissage" 2, et il est inutile de la redécrire.

De même, en sortie 32 de la phase $P'_4$, la phase $P'_5$ va être initiée, phase $P'_5$ identique également à la phase $P_5$ de la branche "Apprentissage" 2.

A l'issu 33 de cette phase $P'_5$, la phase 6 ou $P_6$ est initiée.

La phase $P_6$ comporte quatre étapes. La première étape réalise l'extraction du dictionnaire des références de tout ou partie des locuteurs (par exemples les K plus proches références au sens d'une mesure de ressemblance). La deuxième étape est le calcul des matrices d'erreur entre tout ou partie des références précédemment sélectionnées et les références (ou seulement les caractéristiques statistiques) de l'échantillon sonore à vérifier. La troisième étape consiste en un calcul des mesures de ressemblance à partir de tout ou partie des matrices d'erreur calculées à l'étape précédente. La quatrième étape calcule la vraisemblance de la vérification du locuteur à partir des mesures de vraisemblance calculées lors de la troisième étape.

A l'issu 34 de cette phase $P_6$, une quatrième décision $D_4$ est prise (la première pour cette branche "Vérification" 3). Cette décision porte sur l'authentification ou la non-authentification de l'identité du locuteur en mode vérification.

S'il l'authentification est négative : branche "non" 35, le processus est arrêté ou une action, qui dépend de l'application précise, peut être effectuée. Il peut s'agir, par exemple, de "l'avalement" de la carte magnétique présentée en phase $P_1$, d'une alarme sonore, etc.

Dans le cas contraire : branche "oui" 36, la phase 8 ou $P_8$ est initiée.

Cette phase $P_8$ autorise l'accès à tout ou partie des ressources demandées par le locuteur au cours de la première phase. Selon l'application précise, il peut s'agir, par exemple, de l'ouverture d'une porte, de l'accès à des informations confidentielles, etc.

Une cinquième décision $D_5$ peut également être prise à ce stade (sortie 37 de la phase $P_8$).

Cette décision $D_5$ porte sur la mise à jour éventuelle des références d'élocution du locuteur en cas de très bonne authentification de son identité en mode vérification (branche 3).

Si le résultat de la décision $D_5$ est "non" (branche 38), le processus engagé va se terminer dans la majorité des cas.

Dans le cas contraire (branche "oui" 39), le procédé est de nouveau aiguillé vers la branche de sortie 4 (tronc commun 40) et la phase $P_9$ exécutée. Cette phase a déjà été explicitée, et il est inutile de la redécrire.

Comme pour la branche "Apprentissage" 2, en sortie 41 de cette phase $P_9$, une action peut être prise, action qui dépend naturellement de l'application envisagée. Dans le cas le plus fréquent, le processus engagé s'arrête, le système étant mis à jour pour le locuteur courant et celui-ci ayant eu accès (phase $P_8$) aux ressources demandées.

On va maintenant décrire un premier exemple d'application du procédé selon l'invention, par référence à la figure 3.

L'application visée concerne la protection par une serrure vocale de l'entrée d'un local ou la commande d'un appareil quelconque dont l'accès est réservé à des personnes autorisées.

On suppose que le locuteur U déclare son identité au moyen d'un clavier K type "portier". Pour ce faire, il doit saisir un code qui va être entré dans le système 5 mettant en oeuvre le procédé selon l'invention. D'autres moyens auraient pu être utilisés : badge magnétique, carte à puce, etc.

Le système comporte des circuits communs, en soi, à ceux de l'art connu. Il comprend notamment un dictionnaire 51, dans lequel sont enregistrées des données servant à la vérification des locuteurs connus, et un microprocesseur 50 ou tout système informatique approprié permettant d'effectuer les différents calculs et déterminations précédemment décrits. Dans l'état actuel des techniques, ces calculs s'effectuent sous la commande de programmes enregistrés dans des mémoires fixes (de type "ROM" ou "EPROM", par exemple) et/ou de masse (disque dur), non représentées sur la figure 3.

On supposera à ce stade, pour simplifier, qu'un seul mode de fonctionnement est possible : le mode vérification.

Outre le clavier K, on peut également prévoir des moyens de guidage du locuteur, par exemple un haut-parleur HP commandé, via un convertisseur numérique-analogique 6, par le système 5. Des instructions peuvent être données par ce truchement, au locuteur U. On aurait pu également prévoir, en lieu et place, un écran de visualisation, par exemple à cristaux liquides affichant ces mêmes instructions et donnant des détails sur le déroulement des opérations en cours et des résultats des différentes décisions prises par le système 5.

Enfin, il est prévu un microphone $M_i$, ou tout transducteur électroacoustique approprié, destiné à capter la voix du locuteur U. Un convertisseur analogique-numérique 7 transforme les signaux électriques en sortie du microphone 7 en signaux numériques pouvant être lus par le microprocesseur 50. Pour ce faire, la sortie du convertisseur 7 peut être connectée à un port parallèle ou série, comme il est bien connu.

Une fois le code saisi à l'aide du clavier K, le système 5 acquière des données sur l'identité présumée du requérant, c'est-à-dire le locuteur U. La phase $P_3$ et les phases subséquentes, notamment la phase $P'_4$ (phase 4), peuvent être initiées et exécutées, ce jusqu'à ce qu'une décision soit prise par le système 5 : décision $D_4$, à l'issu de la phase $P_6$.

Si la décision est favorable (figure 2, branche 36), la phase P8 est exécutée et le locuteur a accès aux ressources demandées, par exemple celui-ci a accès à un local fermé par une porte commandée par une gâche électrique symbolisée, sur la figure 3, par un moteur M. On suppose, pour simplifier, que l'alimentation en énergie électrique de cette gâche, est commandée par un relais R sous le contrôle d'un signal électrique $V_C$ délivré par le système 5.

A l'issu de la phase $P_8$, le processus peut s'arrêter (figure 2, branche 38, suite au résultat de la décision $D_5$) ou passer par la phase $P_9$, pendant laquelle le dictionnaire 51 sera mis à jour pour le locuteur U.

Bien qu'il a été supposé que le système ne permettait qu'un seul mode de fonctionnement : le mode "Vérification" qui se prête plus à ce type d'application, le mode "Apprentissage" peut également être implanté. Il suffit, par exemple, de prévoir une touche spécialisée sur le clavier K, permettant le choix entre ces deux modes, ou de dupliquer, dans un autre lieu, les organes d'entrée de code et d'acquisition de la voix.

Dans ce cas il est nécessaire d'implémenter les circuits et instructions permettant d'aiguiller le procédé vers les branches 2 ou 3 (figure 2 : décision $D_1$) et d'exécuter les phases (figure 2 : $P_2$, $P_4$, $P_5$ et $P_7$) et décisions (figure 2 : $D_2$ et $D_3$) propres à la branche 2.

Une deuxième série d'applications du procédé selon l'invention va maintenant être décrite en référence à la figure 4.

Les applications visées concernent l'accès sécurisé à des informations distantes. Il peut s'agir, par exemple, de valider des transactions et opérations financières (bancaires, boursières, etc.).

Pour ce type d'applications, il s'agit d'identifier avec certitude le demandeur ou le donneur d'ordre (cas précité des transactions bancaires, boursières, etc.).

Ce dernier n'étant pas, par hypothèse, en relation de proximité avec le centre de décision, va formuler ses requêtes à l'aide d'un appareil téléphonique standard, sauf à disposer de moyens de communication informatiques sécurisés, ce qui sort du cadre de la présente invention.

La figure 4 illustre schématiquement l'architecture d'un système permettant des transactions sécurisées et mettant en oeuvre le procédé selon l'invention. Le terme "transactions" est utilisé ici dans son sens le plus général et recouvre les diverses définitions rappelées ci-dessus.

Le locuteur U dispose d'un combiné téléphonique 9 pour appeler un "centre d'informations réservées" 8. Il peut s'agir, par exemple, de son agence bancaire ou de tout autre organisme similaire (agent en bourse, etc.).

Pour fixer les idées, on va supposer que le locuteur désire donner un ordre de transfert d'une somme donnée de son compte vers un autre compte. La donnée la plus importante à authentifier est naturellement l'identité du donneur d'ordre. On peut faire appel aux techniques habituelles telles que mots de passe ou technique similaire, ou encore rappel du demandeur par le centre bancaire à un numéro prévu à l'avance pour s'assurer de l'identité de l'appelant. Cependant, ces techniques présentent une sécurité limitée.

Aussi, un appel du type précité sera commuté sur un système 5 de vérification de l'identité du locuteur U, similaire au système 5 de la figure 3. Dans une autre variante, illustrée par la figure 4, des numéros téléphoniques sont réservés à ce type d'appel et ce dernier aboutit directement sur un. central spécialisé (non représenté) couplé au système 5.

A l'aide, par exemple, d'un synthétiseur de voix (non représenté), le système 5 peut "accueillir" le locuteur et le guider pour les opérations subséquentes.

Si on suppose que le téléphone comporte un clavier à touches numériques K, le locuteur U peut entrer un code secret d'identification à l'aide de celui-ci. Cette saisie initie la phase $P_1$ du procédé.

L'entrée du code pourrait également s'effectuer à l'aide d'un appareil du type "MINITEL" muni d'un lecteur de carte.

Le synthétiseur de voix précité peut alors demander au locuteur de prononcer une ou plusieurs phrases, ce qui permet l'exécution des autres phases propres à la branche "Vérification" (figure 2 : 3), sauf s'il y a d'emblée refus (figure 2 : décision $D_1$, branche "Refus" 11). Cette éventualité existe si le code entré à l'aide du clavier n'est pas reconnu par le système : code erroné ou tentative frauduleuse. De façon classique, il pourra être accordé un nombre limité d'essais (par exemple trois). Chaque essai infructueux rebouclera sur la phase $P_1$. Au bout du $N^{ème}$ essai infructueux (maximum permis), la liaison pourra être interrompue et, éventuellement, une trace de l'appel gardé en mémoire.

Si les phases de vérification se déroulent normalement, à la fin de la phase $P_8$, l'identité du locuteur aura été vérifiée formellement car sa voix aura été reconnue. Ceci est donc l'équivalent d'une "signature électronique", en l'occurrence sonore. Des essais ont montré que la sécurité est très élevée, car le taux de réussite (reconnaissance) est de l'ordre de 99 % sur plusieurs centaines de locuteurs. En outre, il doit être clair que le contenu du texte à prononcer est libre. Enfin, en cas de non-reconnaissance, le système ne donne pas accès aux ressources escomptées.

Dans l'exemple décrit, le système 5 peut donner accès à un système automatisé ou à une personne physique, sous la référence générale 8.

Dans le premier cas, le locuteur U pourra utiliser les touches de son clavier K pour transmettre ses ordres ou requêtes. Dans le second cas, il pourra directement converser avec son interlocuteur, ce dernier étant certain de l'identité de l'appelant U. Le locuteur U pourra également être mis en communication avec un serveur vocal, par exemple pour obtenir des informations à diffusion restreinte (état de son compte, etc.).

Ce système permet donc d'effectuer un grand nombre d'opérations à distance ou d'obtenir toutes sortes d'informations, ce avec une sécurité maximale.

A la lecture de ce qui précède, on constate aisément que l'invention atteint bien les buts qu'elle s'est fixés.

Il doit être clair aussi que, bien que particulièrement adaptée aux deux séries d'applications qui ont été détaillées par référence aux figures 3 et 4, on ne saurait cantonner l'invention à ce seul. type d'applications.

Elle trouve de nombreuses autres applications et notamment les suivantes :

- Indexation de données multimédias en terme de vérification du locuteur, d'identification du locuteur et de détection de changements de locuteurs ;
- Identification biométrique utilisée à des fins de preuve en justice, de vérification et validation de clauses contractuelles, de fabrication de carte d'identification ;
- Surveillance de canaux de communication.

**Revendications**

1. Procédé de reconnaissance vocale d'un locuteur mettant en oeuvre un modèle prédictif d'ordre q, comprenant au moins une phase d'extraction de caractéristiques statistiques ($P_4$, $P'_4$) comportant au moins une étape d'acquisition numérique d'un échantillon sonore d'une durée déterminée D du locuteur (U), correspondant à au moins une élocution du locuteur (U), une étape de transformation de cet échantillon sonore en une suite de vecteurs de dimension déterminée p, obtenus à partir d'une suite de fenêtres d'analyse de durée moyenne T et d'intervalle moyen I, et une étape de détermination de q+1 matrices de corrélation d'ordre p x p à partir de cette suite de vecteurs, avec p et q nombres entiers différents de zéro, caractérisé en ce que ladite durée moyenne T a une durée inférieure à 10 ms.

2. Procédé selon la revendication 1, caractérisé en ce que ledit intervalle moyen I a une durée inférieure à 4,5 ms.

3. Procédé selon la revendication 2, caractérisé en ce que ledit intervalle moyen I, ladite durée moyenne T et ledit l'ordre q du modèle prédictif sont reliés par l'inéquation suivante :

$$I < T/max(3, q)$$

**4.** Procédé selon l'une quelconque des revendications précédentes, caractérisé en ce que, lesdites matrices de corrélation et ledit modèle prédictif correspondant étant stockés dans au moins un dictionnaire (51), il comprend une phase ($P_9$) de mise à jour d'un desdits dictionnaires (51) pour un locuteur déterminé (U) comportant au moins une première étape d'extraction à partir d'un dictionnaire (51) desdites q+1 matrices de corrélation de ce locuteur, une deuxième étape de détermination d'une nouvelle suite de q+1 matrices de corrélation à partir de vecteurs de dimension p, obtenus par la transformation d'un nouvel échantillon sonore du locuteur en cette suite de vecteurs et une troisième étape de détermination d'une suite de q+1 matrices de corrélation mises à jour consistant à l'accumulation et au stockage dans l'un desdits dictionnaires (51) des q+1 matrices de corrélation extraites pendant la première étape et des q+1 matrices de corrélation déterminées pendant la deuxième étape.

**5.** Procédé selon la revendication 4, caractérisé en ce que ladite troisième étape comprend en outre la détermination d'un modèle prédictif correspondant à la détermination de la suite de q+1 matrices de corrélation mises à jour et à son stockage dans ledit dictionnaire.

**6.** Procédé selon l'une quelconque des revendications 1 à 3, caractérisé en ce que, lesdites matrices de corrélation et ledit modèle prédictif correspondant étant stockés dans au moins un dictionnaire (51), il comprend une séquence de phases d'apprentissage ($P_2$, $P_4$, $P_5$, $P_7$, $P_9$) des données statistiques associées à un nouveau locuteur (U), en ce que cette séquence comprend au moins une phase ($P_9$) comportant au moins une première étape de détermination d'une nouvelle suite de q+1 matrices de corrélation à partir de vecteurs de dimension p, obtenus par la transformation d'un nouvel échantillon sonore du nouveau locuteur (U) en cette suite de vecteurs, à la détermination d'un modèle prédictif correspondant à cette suite de q+1 matrices de corrélation et une deuxième étape consistant au stockage dans lesdits dictionnaires (51) des q+1 matrices de corrélation et du modèle prédictif déterminées pendant la première étape.

**7.** Procédé selon l'une quelconque des revendications 1 à 3, caractérisé en ce qu'il comprend une séquence de phases ($P_3$, $P'_4$, $P'_5$, $P_6$, $P_8$) permettant la vérification de l'identité d'un locuteur et en ce que cette séquence comprend au moins les phases suivantes :

- une phase ($P'_5$) de détermination d'un modèle prédictif comportant une première étape consistant à déterminer, à partir desdites caractéristiques statistiques d'au moins une élocution, q matrices de prédiction et une deuxième étape réalisant le calcul de l'inverse de la matrice d'erreur entre une suite des vecteurs de dimension p calculés à partir de l'échantillon sonore de chacune des élocutions et le modèle prédictif calculé sur ces mêmes vecteurs, l'ensemble des q+1 matrices définissant le modèle prédictif de l'élocution du locuteur et les références de l'élocution d'un locuteur étant constituées desdites caractéristiques statistiques et du modèle prédictif associé ;
- une phase ($P_6$) de vérification de l'identité dudit locuteur comportant une première étape pendant laquelle des références d'élocution d'au moins une partie des locuteurs sont extraites d'un dictionnaire, une deuxième étape de calcul de matrices d'erreur entre au moins une partie des références d'élocution précédemment extraites et les références d'élocution de l'échantillon sonore à vérifier, une troisième étape consistant en un calcul des mesures de ressemblance à partir d'au moins une partie des matrices d'erreur calculées pendant la deuxième étape et une quatrième étape de calcul de la vraisemblance de la vérification dudit locuteur à partir des mesures de vraisemblance calculées lors de la troisième étape ;

et une phase ($P_8$) autorisant l'accès à au moins une partie de ressources prédéterminées préalablement demandées par ledit locuteur au cours d'une phase préliminaire ($P_1$), lorsque la vérification de ladite identité est positive.

**8.** Procédé selon l'une quelconque des revendications précédentes, caractérisé en ce que ledit modèle prédictif est un modèle prédictif autorégressif vectoriel.

**9.** Système d'accès sécurisé à une ressource réservée à au moins un locuteur autorisé, système mettant en oeuvre le procédé selon les revendications 7 ou 8, caractérisé en ce qu'il comprend une serrure vocale sensible à un échantillon sonore d'un locuteur (U) à vérifier, la serrure comportant au moins un transducteur électroacoustique ($M_i$) couplé à un dispositif de conversion (7) de l'échantillon sonore dudit locuteur en un signal numérique, un système de calcul (5, 50) à programme enregistré, couplé à au moins un dictionnaire (51), recevant ce signal numérique pour déterminer lesdites références d'élocution de l'échantillon sonore à vérifier, pour vérifier à partir de ces références et de références d'élocutions stockées dans le dictionnaire (51) l'identité du locuteur (U), et pour délivrer un signal de commande ($V_C$) présentant au moins deux états, un état étant représentatif d'une vérification positive de l'identité d'un locuteur autorisé permettant l'accès à ladite ressource.

10. Système d'accès sécurisés à une transaction réservée à au moins un locuteur autorisé, système mettant en oeuvre le procédé selon les revendications 7 ou 8, caractérisé en ce qu'il comprend au moins un dispositif téléphonique (9) comportant au moins un transducteur électroacoustique, le dispositif téléphonique transmettant (9), par une ligne téléphonique, au moins un échantillon sonore d'un locuteur (U) à vérifier à un système de calcul (5, 50) à programme enregistré, couplé à au moins un dictionnaire (51), le système déterminant lesdites références d'élocution de l'échantillon sonore à vérifier, vérifiant à partir de ces références et de références d'élocutions stockées dans le dictionnaire (51) l'identité du locuteur (U) et autorisant ladite transaction sur vérification positive de l'identité d'un locuteur autorisé.

**Patentansprüche**

1. Verfahren zur Spracherkennung eines Sprechers, bei dem ein prädiktives Modell der Ordnung q eingesetzt wird, umfassend zumindest eine Phase zur Gewinnung von statistischen Merkmalen ($P_4$, $P'_4$) mit zumindest einem Schritt zur digitalen Erfassung eines Schallmusters einer vorbestimmten Dauer D des Sprechers (U), die zumindest einer Sprechäußerung des Sprechers (U) entspricht, einem Schritt zur Umwandlung dieses Schallmusters in eine Folge von Vektoren einer bestimmten Dimension p, die ausgehend von einer Reihe von Analysefenstern einer mittleren Zeitdauer T und eines mittleren Intervalls I erhalten werden, und einem Schritt zur Bestimmung von q+1 Korrelationsmatrizen der Ordnung p x p ausgehend von der genannten Folge von Vektoren, wobei p und q ganze Zahlen sind, die sich von Null unterscheiden, dadurch gekennzeichnet, daß die genannte mittlere Zeitdauer T eine Dauer aufweist, die kleiner als 10 ms ist.

2. Verfahren nach Anspruch 1, dadurch gekennzeichnet, daß das genannte mittlere Intervall I eine Zeitdauer aufweist, die kleiner als 4,5 ms ist.

3. Verfahren nach Anspruch 2, dadurch gekennzeichnet, daß das genannte mittlere Intervall I, die genannte mittlere Zeitdauer T und die Ordnung q des prädiktiven Modells über die folgende Ungleichung miteinander zusammenhängen:

$$I < T/\max (3, q)$$

4. Verfahren nach einem der vorangehenden Ansprüche, dadurch gekennzeichnet, daß die genannten Korrelationsmatrizen und das genannte entsprechende prädiktive Modell in zumindest einem Wörterverzeichnis (51) gespeichert sind, wobei das Verfahren eine Phase ($P_9$) zur Aktualisierung eines der genannten Wörterverzeichnisse (51) für einen bestimmten Sprecher (U) aufweist, die zumindest einen ersten Schritt zur Gewinnung, ausgehend von einem Wörterverzeichnis (51), der genannten q+1 Korrelationsmatrizen dieses Sprechers umfaßt, einen zweiten Schritt zur Bestimmung einer neuen Folge von q+1 Korrelationsmatrizen ausgehend von Vektoren der Dimension p, erhalten durch die Transformation eines neuen Schallmusters des Sprechers in dieser Folge von Vektoren, und einen dritten Schritt zur Bestimmung einer Folge von q+1 aktualisierten Korrelationsmatrizen umfaßt, der in der Sammlung und Speicherung, in einem der genannten Wörterverzeichnisse (51), der q+1 Korrelationsmatrizen besteht, die in dem ersten Schritt extrahiert worden sind, und der q+1 Korrelationsmatrizen, die in dem zweiten Schritt bestimmt worden sind.

5. Verfahren nach Anspruch 4, dadurch gekennzeichnet, daß der genannte dritte Schritt die Bestimmung eines prädiktiven Modells umfaßt, das der Bestimmung der Folge von q+1 aktualisierten Korrelationsmatrizen und deren Speicherung in dem genannten Wörterverzeichnis entspricht.

6. Verfahren nach einem der Ansprüche 1 bis 3, dadurch gekennzeichnet, daß die genannten Korrelationsmatrizen und das genannte entsprechende prädiktive Modell in zumindest einem Wörterverzeichnis (1) gespeichert sind, wobei das Verfahren eine Folge von Lernphasen ($P_2$, $P_4$, $P_5$, $P_7$, $P_9$) der statistischen Daten umfaßt, die einem neuen Sprecher (U) zugeordnet sind, wobei diese Folge zumindest eine Phase ($P_9$) umfaßt, die wenigstens einen ersten Schritt zur Bestimmung einer neuen Folge von q+1 Korrelationsmatrizen ausgehend von Vektoren der Dimension p, die durch Transformation eines neuen Schallmusters des neuen Sprechers (9) in dieser Folge von Vektoren erhalten worden sind, zur Bestimmung eines prädiktiven Modells, das dieser Folge von q+1 Korrelationsmatrizen entspricht, und einen zweiten Schritt, der in der Speicherung der genannten Wörterverzeichnisse (51) der q+1 Korrelationsmatrizen und des prädiktiven Modells, das in dem ersten Schritt bestimmt worden ist, aufweist.

7. Verfahren nach einem der Ansprüche 1 bis 3, dadurch gekennzeichnet, daß es eine Folge von Phasen ($P_3$, $P'_4$, $P'_5$, $P_6$, $P_8$) umfaßt, die die Verifizierung der Identität eines Sprechers ermöglichen, wobei diese Folge zumindest die folgenden Phasen enthält:

   - eine Phase ($P'_5$) zur Bestimmung eines prädiktiven Modells mit einem ersten Schritt, der darin besteht, ausgehend von den genannten statistischen Eigenschaften von zumindest einer Sprechäußerung, q Prädiktionsmatrizen zu bestimmen, und mit einem zweiten Schritt, der die Berechnung der Inversen der Fehlermatrix zwischen einer Folge von Vektoren der Dimension p, berechnet ausgehend von dem Schallmuster einer jeden Sprechäußerung, und dem prädiktiven Modell, berechnet auf diesen gleichen Vektoren, ausführt, wobei die Gesamtheit der q+1 Matrizen das prädiktive Modell der Sprechäußerung des Sprechers festlegt, wobei die Referenzen der Sprechäußerung eines Sprechers durch die genannten statistischen Merkmale und das zugehörige prädiktive Modell gebildet werden;

   - eine Phase ($P_6$) zur Verifizierung der Identität des Sprechers, mit einem ersten Schritt, bei dem Sprechäußerung-Referenzen von zumindest einem Teil der Sprecher aus einem Wörterverzeichnis extrahiert werden, einem zweiten Schritt zur Berechnung der Fehlermatrizen zwischen zumindest einem Teil der Sprechäußerungs-Referenzen, die zuvor extrahiert worden waren, und den Sprechäußerungs-Referenzen des zu verifizierenden Schallmusters, einem dritten Schritt, der in einer Berechnung der Maße der Ähnlichkeit ausgehend von zumindest einem Teil der während des zweiten Schritts berechneten Fehlermatrizen besteht, und einem vierten Schritt zur Berechnung der Wahrscheinlichkeit der Verifizierung des genannten Sprechers ausgehend von Maßen der Wahrscheinlichkeit, die im dritten Schritt berechnet worden sind;

   - und eine Phase ($P_8$), die den Zugang zu zumindest einem Teil von vorbestimmten und vorher durch den genannten Sprecher während einer Vorabphase ($P_1$) verlangten Ressourcen freigibt, wenn die Verifizierung der genannten Identität positiv ist.

8. Verfahren nach einem der vorangehenden Ansprüche, dadurch gekennzeichnet, daß das genannte prädiktive Modell ein autoregressives, vektorielles prädiktives Modell ist.

9. System zum gesicherten Zugang zu einer für zumindest einen autorisierten Sprecher reservierten Ressource, wobei das System das Verfahren nach Anspruch 7 oder 8 einsetzt, dadurch gekennzeichnet, daß es einen stimmlichen Schlüssel aufweist, der auf ein Schallmuster eines zu verifizierenden Sprechers (U) anspricht, wobei der Schlüssel zumindest einen elektroakustischen Wandler ($M_i$) aufweist, der an eine Einrichtung zur Umwandlung (7) des Schallmusters des genannten Sprechers in ein digitales Signal gekoppelt ist, ein Rechensystem (5, 50) mit gespeichertem Programm, das mit wenigstens einem Wörterverzeichnis (51) gekoppelt ist, das dieses digitale Signal aufnimmt, um die genannten Sprechäußerungs-Referenzen des zu überprüfenden Schallmusters zu bestimmen, um ausgehend von diesen Referenzen und von in dem Wörterverzeichnis (51) gespeicherten Sprechäußerungs-Referenzen die Identität des Sprechers (U) zu verifizieren, und um ein zumindest zwei Zustände aufweisendes Steuersignal ($V_C$) abzugeben, wobei ein Zustand für eine positive Verifizierung der Identität eines autorisierten Sprechers, die den Zugang zu der genannten Ressource ermöglicht, repräsentativ ist,

10. System für einen gesicherten Zugang zu einer zumindest für einen autorisierten Sprecher reservierten Transaktion, wobei das System das Verfahren nach Anspruch 7 oder 8 einsetzt, dadurch gekennzeichnet, daß es zumindest ein Telefongerät (9) umfaßt, das zumindest einen elektroakustischen Wandler aufweist, wobei das Telefongerät über eine Telefonleitung zumindest ein Schallmuster eines zu überprüfenden Sprechers (U) an ein Rechensystem (5, 50) mit gespeichertem Programm überträgt (9), das mit zumindest einem Wörterverzeichnis (51) gekoppelt ist, wobei das System die genannten Sprechäußergns-Referenzen des zu überprüfenden Sprachmusters bestimmt, ausgehend von diesen Referenzen und von in dem Wörterverzeichnis (51) gespeicherten Sprechäußerungs-Referenzen die Identität des Sprechers (U) überprüft und die genannte Transaktion auf eine positive Verifizierung der Identität eines autorisierten Sprechers hin zuläßt.

## EP 0 896 711 B1

**Claims**

1.  Method for the voice recognition of a speaker using a q-order predictive model comprising at least one phase of extracting statistical characteristics ($P_4$, $P'_4$) including at least one step of digital acquisition of an audio sample of particular duration D of the speaker (U) corresponding to at least one utterance of the speaker (U), a step of transforming this audio sample into a series of vectors of particular dimension p obtained from a series of analysis windows of average duration T and with average spacing I, and a step of determining q+1 correlation matrices of order p x p from this series of vectors, where p and q are non-zero integers, characterized in that the said average duration T has a duration of less than 10 ms.

2.  Method according to Claim 1, characterized in that the said average spacing I has a duration of less than 4.5 ms.

3.  Method according to Claim 2, characterized in that the said average spacing I, the said average duration T and the said order q of the predictive model are connected by the following inequality:

$$I < T/max(3, q)$$

4.  Method according to any one of the preceding claims, characterized in that, the said correlation matrices and the said corresponding predictive model being stored in at least one dictionary (51), it comprises a phase ($P_9$) of updating one of the said dictionaries (51) for a particular speaker (U) including at least a first step of extracting from a dictionary (51) the said q+1 correlation matrices of this speaker, a second step of determining a new series of q+1 correlation matrices from vectors of dimension p obtained by transforming a new audio sample of the speaker into this series of vectors and a third step of determining a series of q+1 updated correlation matrices consisting in accumulating and storing in one of the said dictionaries (51) the q+1 correlation matrices extracted during the first step and the q+1 correlation matrices determined during the second step.

5.  Method according to Claim 4, characterized in that the said third step further comprises determining a predictive model corresponding to the determination of the series of q+1 updated correlation matrices and storing it in the said dictionary.

6.  Method according to any one of Claims 1 to 3, characterized in that, the said correlation matrices and the said corresponding predictive model being stored in at least one dictionary (51), it comprises a sequence of learning phases ($P_2$, $P_4$, $P_5$, $P_7$, $P_9$) of statistical data associated with a new speaker (U), in that this series comprises at least one phase ($P_9$) including at least a first step of determining a new series of q+1 correlation matrices from vectors of dimension p obtained by transforming a new audio sample of the new speaker (U) into this series of vectors, determining a predictive model corresponding to this series of q+1 correlation matrices and a second step consisting in storing in the said dictionaries (51) the q+1 correlation matrices and the predictive model determined during the first step.

7.  Method according to any one of Claims 1 to 3, characterized in that it comprises a sequence of phases ($P_3$, $P'_4$, $P'_5$, $P_6$, $P_8$) enabling the identity of a speaker to be identified and in that this series comprises at least the following phases:

    -   a phase ($P'_5$) of determining a predictive model including a first step consisting in determining, from the said statistical characteristics of at least one utterance, q prediction matrices and a second step calculating the inverse of the error matrix between a series of vectors of dimension p calculated from the audio sample of each of the utterances and the predictive model calculated from these same vectors, the set of q+1 matrices defining the predictive model of the utterance of the speaker and the references of the utterance of a speaker consisting of the said statistical characteristics and the associated predictive model;
    -   a phase ($P_6$) of verifying the identity of the said speaker including a first step during which utterance references of at least some of the speakers are extracted from a dictionary, a second step of calculating error matrices between at least some of the utterance references previously extracted and the utterance references of the audio sample to be verified, a third step consisting in calculating resemblance measures from at least some of the error matrices calculated during the second step and a fourth step of calculating the likelihood of the verification of the said speaker from the resemblance measures calculated in the third step;
    -   and a phase ($P_8$) authorizing access to at least some of the predetermined resources previously requested by the said speaker during a preliminary phase ($P_1$), when the verification of the said identity is positive.

15

8. Method according to any one of the preceding claims, characterized in that the said predictive model is a vector autoregressive predictive model.

9. System for secure access to a resource restricted to at least one authorized speaker, the system employing the method according to Claims 7 or 8, characterized in that it comprises a voice lock sensitive to an audio sample of a speaker (U) to be verified, the lock including at least one electroacoustic transducer ($M_i$) coupled to a device (7) for converting the audio sample of the said speaker into a digital signal, a calculating system (5, 50) with recorded program coupled to at least one dictionary (51) and receiving this digital signal to determine the said utterance references of the audio sample to be verified to verify the identity of the speaker (U) from these references and from utterance references stored in the dictionary (51), and to deliver a control signal ($V_C$) having at least two states, one state being representative of positive verification of the identity of an authorized speaker allowing access to the said resource.

10. System for secure access to a transaction restricted to at least one authorized speaker, the system employing the method according to Claims 7 or 8, characterized in that it comprises at least one telephone device (9) including at least one electroacoustic transducer, the telephone device (9) transmitting over a telephone line at least one audio sample of a speaker (U) to be verified in a calculation system (5, 50) with recorded program coupled to at least one dictionary (51), the system determining the said utterance references of the audio sample to be verified, verifying the identity of the speaker (U) from these references and from utterance references stored in the dictionary (51), and authorizing the said transaction on positive verification of the identity of an authorized speaker.

# FIG_2

FIG_3

FIG_4

FIG_1